# EUROPÄISCHE PATENTANMELDUNG

(11) **EP 2 977 101 A1**
(43) Veröffentlichungstag der Anmeldung: **27.01.2016**
(21) Anmeldenummer: 15174871.2
(22) Anmeldetag: 01.07.2015
(51) Int. Cl.: B01D 71/80, B01D 67/00

(54) **VERFAHREN ZUR HERSTELLUNG EINER MEMBRAN MIT ISOPORÖSER TRENNAKTIVER SCHICHT MIT EINSTELLBARER PORENGRÖSSE, MEMBRAN, FILTRATIONSMODUL UND VERWENDUNG**

(30) Priorität: 04.07.2014 DE 102014213027
(71) Anmelder: Helmholtz-Zentrum Geesthacht Zentrum für Material- und Küstenforschung GmbH, 21502 Geesthacht (DE)
(72) Erfinder: ABETZ, Volker, 21335 Lüneburg (DE); RADJABIAN, Maryam, 21502 Geesthacht (DE)
(74) Vertreter: Seemann & Partner

(57) **Zusammenfassung**

Die Erfindung betrifft ein Verfahren zur Herstellung einer Polymermembran, insbesondere Flachmembran oder Hohlfadenmembran, mit einer isoporösen trennaktiven Schicht mit voreingestellter oder voreinstellbarer Porengröße, insbesondere einer Ultrafiltrationsmembran oder Nanofiltrationsmembran. Die Erfindung betrifft ferner eine entsprechende Membran und deren Verwendung sowie ein Filtrationsmodul.

Es wird eine Polymerlösung mit wenigstens einem Lösungsmittel hergestellt, in dem wenigstens zwei verschiedene zuvor hergestellte amphiphile Blockcopolymere mit zwei verschiedenen Polymerblöcken und geringer Polydispersität gelöst werden. Aus der Polymerlösung wird die isoporöse Flachmembran oder Hohlfadenmembran hergestellt

Erfindungsgemäß sind die Polymerblöcke der wenigstens zwei verschiedenen Blockcopolymere in der Polymerlösung jeweils paarweise homogen miteinander mischbar und wird in der Polymerlösung ein homogener Blend aus den verschiedenen Blockcopolymeren hergestellt, wobei die verschiedenen Blockcopolymere sich in ihren Molekulargewichten und/oder in ihren relativen Blocklängen unterscheiden und eine Porengröße in der trennaktiven Schicht durch eine Einstellung eines Mischungsverhältnisses der beiden Blockcopolymere im Blend eingestellt wird.

## Beschreibung

Die Erfindung betrifft ein Verfahren zur Herstellung einer Polymermembran, insbesondere Flachmembran oder Hohlfadenmembran, mit einer isoporösen trennaktiven Schicht mit voreingestellter oder voreinstellbarer Porengröße, insbesondere einer Ultrafiltrationsmembran oder Nanofiltrationsmembran. Die Erfindung betrifft ferner eine entsprechende Membran und deren Verwendung sowie ein Filtrationsmodul.

Für die Ultrafiltration werden heutzutage überwiegend Membranen eingesetzt, die nach einem so genannten Phaseninversionsverfahren hergestellt werden. Diese Membranen weisen üblicherweise eine mehr oder weniger große statistische Streuung bei der Verteilung der Porengröße auf, vgl. S. Nunes, K.-V. Peinemann (HrG.): Membrane Technology in the Chemical Industry, Wiley-VCH, Weinheim 2006, S. 23-32. Solche Membranen neigen zum so genannten "Fouling" und lassen wegen der breiten Streuung in der Verteilung der Porengröße keine präzise Trennung eines Stoffgemisches zu. Unter "Fouling" versteht man ein schnelles Verblocken der großen Poren, da ein Großteil der durch die Membran tretenden Flüssigkeit zunächst durch die großen Poren tritt. Seit einiger Zeit wird daher versucht, isoporöse Membranen herzustellen, d.h. Membranen mit einer geringen Streuung in der Verteilung ihrer Porengröße.

In dem deutschen Patent Nr. 10 2006 045 282 der Anmelderin ist ein Verfahren offenbart, mit dem Polymermembranen mit isoporösen trennaktiven Oberflächen herstellbar sind. Hierzu wird ein amphiphiles Blockcopolymer in einer Polymerlösung mit einem oder mehreren Lösungsmitteln gelöst, zu einem Film ausgestrichen und der Film in ein Fällbad eingetaucht.

Dieses Verfahren nutzt den Umstand aus, dass die Polymerblöcke des amphiphilen Blockcopolymers untereinander nicht mischbar sind. In einer Polymerlösung liegen die Blockcopolymere im Wesentlichen homogen gemischt vor, wenn das Lösungsmittel nicht oder nur schwach selektiv ist, da das Lösungsmittel (oder Lösungsmittelgemisch) die abstoßenden Wechselwirkungen zwischen den verschiedenartigen Blöcken abschirmt. Im Falle selektiver Lösungsmittel kommt es zur Ausbildung von mizellartigen Strukturen, wie beispielsweise sphärischen oder zylindrischen Mizellen. Wenn das Lösungsmittel durch Verdampfen oder Austausch mit einem Nichtlösemittel entzogen wird, kommt es zu einer Mikrophasenseparation zwischen den verschiedenartigen Blöcken. In einer kurzen Abdampfzeit verdampft ein oberflächennaher Teil des flüssigen Lösungsmittels, so dass in einer oberflächennahen Schicht des Films die Mikrophasenmorphologie, die sich aufgrund der Selbstorganisation der Polymerblöcke der Blockcopolymere ausgebildet hat, verfestigt, während sich die Blockcopolymere im Bulk der Polymerlösung noch stets in Lösung befinden.

Durch das Eintauchen dieses Films in ein Fällbad wird der Rest des Lösungsmittels verdrängt und es findet ein bekannter nichtlösungsmittelinduzierter Phaseninversionsprozess (NIPS - "nonsolvent induced phase separation") statt, der in einer bekannten schwammartigen Struktur des Bulks der Membran resultiert. In einigen Fällen bleibt dabei die zuvor eingestellte mikrophasenseparierte isoporöse Struktur der oberflächennahen Schicht trotz des Eintauchens in das Fällbad erhalten. Diese geht dann direkt in die schwammartige Struktur über. Die resultierende Membran ist integralasymmetrisch, da die isoporöse trennaktive Schicht und die schwammartige Trägerschicht stoffeinheitlich, also integral miteinander verbunden sind. Weitere Angaben sind in DE 10 2006 045 282 A1 enthalten, deren Offenbarung vollinhaltlich in der vorliegenden Patentanmeldung aufgenommen sein soll.

Diese technische Lehre wurde weiterentwickelt in der internationalen Patentanmeldung WO 2011/098851 A1 von Peinemann et al., deren Offenbarungsgehalt ebenfalls vollinhaltlich in dieser Patentanmeldung aufgenommen sein soll. Darin wird vorgeschlagen, der Polymerlösung ein Metallsalz zuzugeben, das mit wenigstens einem der Polymerblöcke des Blockcopolymers Komplexe formt. Bei den Metallsalzen handelt es sich um starke Komplexbildner, nämlich Übergangsmetalle wie beispielsweise Kupfer, Kobalt, Nickel, Eisen unter anderem. Als Beispiel wird ein Copolymer aus Polystyrol (PS) und Poly-4-vinylpyridin (P4VP) mit einem Zusatz von Kupferacetat genannt.

Das Polystyrol agiert als Matrixbildner, während das P4VP in der ausgefällten Membran die Poren bildet. Das Kupfer bildet Komplexe mit den Pyridingruppen des P4VP, der hydrophilen Komponente des Blockcopolymers. Der Komplex stabilisiert dabei während des Abdampfens von Lösungsmittel und während des Phaseninversionsprozesses die Porenstruktur der Oberfläche.

Die Übergangsmetallkomplexe sind vergleichsweise stark und schlecht auswaschbar, so dass im Gebrauch der Membranen im Laufe der Zeit biologisch schädliche Übergangsmetallionen ausgewaschen werden, was die Membranen für biologische Anwendungen, und besonders für gesundheitsrelevante Anwendungen, unbrauchbar macht.

In der deutschen Patentanmeldung DE 10 2012 207 338 A1 der Anmelderin war die integralasymmetrische isoporöse Struktur mit schwammartiger Schutzschicht ebenfalls gezeigt worden, und zwar auf der Grundlage verschiedener PS-*b*-P4VP-Blockcopolymere, denen ein Salz eines Hauptgruppenelements der zweiten Hauptgruppe in der Polymerlösung zugefügt wurden, wobei einer der Polymerblöcke Komplexe mit dem Hauptgruppenelement bildet. Als Salz des Komplexbildners wurde Magnesiumacetat verwendet. Magnesium ist nicht so gesundheitsschädlich, ist allerdings auch ein schwächerer Komplexbildner als die Übergangsmetalle. Das Ergebnis mit der Zugabe von Magnesiumacetat bzw. Salzen der zweiten Hauptgruppe zur Bildung isoporöser PS-*b*-P4VP-Membranen wurde auch in dem Artikel von M. Gallei et al., "The Influence of Magnesium Acetate on the Structure Formation of Polystyrene-block-poly(4-vinylpyridine)-Based Integral-Asymmetric Membranes", Macromol. Chem. Phys. 2013, 214, 1037-1046, beschrieben.

In DE 10 2012 207 338 A1 wurde außerdem gezeigt, dass ein guter linearer Zusammenhang zwischen der Porengröße und der gesamten Blockcopolymerlänge vorliegt. Auch die Porenabstände hängen linear von dem Molekulargewicht ab, und zwar in einem Bereich zwischen 170 und 310 kDa. Die Porendurchmesser bewegten sich im Bereich von 35 bis 70 Nanometer.

Ein weiteres Beispiel für die Herstellung integralasymmetrischer isoporöser Polymermembranen auf Blockcopolymerbasis ist in der deutschen Patentanmeldung DE 10 2012 207 344 A1 der Anmelderin gezeigt. Darin wurde ein Diblockcopolymer aus Polystyrol und Polyethylenoxid (PEO) verwendet mit einem Gesamtmolekulargewicht von 280 kDa, die durch anionische Polymerisation hergestellt wurden. Die Polymerlösung wurde in einem Fällungsbad aus Diethylether ausgefällt.

In der europäischen Patentanmeldung EP 2 695 669 A1 der Anmelderin waren entsprechende isoporöse integralasymmetrische Membranen dadurch geschaffen worden, dass einer Polymerlösung mit einem amphiphilen Blockcopolymer ein Kohlenhydrat zugegeben wurde, womit eine noch bioverträglichere Variante des Herstellungsverfahrens geschaffen wurde. Als Kohlenhydrat kamen beispielsweise Saccharose, Traubenzucker, Fruchtzucker und Zyklodextrin infrage. Als Blockcopolymer wurde PS-*b*-P4VP verwendet. Die Zugabe von Kohlenhydraten zur Bildung isoporöser PS-*b*-P4VP-Diblock-Copolymere wurde auch in J. I. Clodt et al., "Carbohydrates as Additives fort he Formation of Isoporous PS-b-P4VP Diblock Copolymer Membranes", Macromol. Rapid Commun. 34, 190 - 194 (2013) beschrieben.

Eine Studie zur Charakterisierung der Selbstorganisation von Blockcopolymeren in nanoporösen Membranen ist außerdem aus dem Artikel L. Oss-Ronen et al., "Characterization of Block Copolymers Self-Assembly: From Solution to Nanoporous Membranes", Macromolecules 2012, 45, 9631-9642 zu entnehmen.

Aus der deutschen Patentanmeldung DE 10 2012 221 378 A1 der Anmelderin ist außerdem ein Verfahren zur Herstellung einer selbststützenden integral-asymmetrischen Hohlfaden-Polymermembran mit isoporöser Außenhaut, poröser Innenhaut und schwammartiger Innenstruktur in einem dry/wet-Spinning-Verfahren bekannt. Darin wurde zum ersten Mal die Herstellung von Hohlfaden-Polymermembranen auf PS-*b*-P4VP-Basis mit isoporöser Außenhaut, poröser Innenhaut und einer schwammartigen Stützstruktur gezeigt, wobei eine Polymerlösung mit wenigstens einem Lösungsmittel, in dem wenigstens ein amphiphiles Blockcopolymer mit wenigstens zwei verschiedenen Polymerblöcken gelöst wird, hergestellt und durch eine als Hohlkerndüse oder Mehrfachhohlkerndüse ausgebildete Spinndüse zur Formung eines Hohlfadens gepresst wird, in dessen Mitte eine Flüssigkeitssäule gesponnen wird, die aus einem Fällmittel mit herabgesetzter Fällaktivität besteht, wobei der gesponnene Hohlfaden nach Durchlaufen einer Fallstrecke in einer Atmosphäre der Hohlfaden-Polymermembran in ein Fällbad zur Formung eingetaucht wird.

Die Durchführung des in DE 10 2012 221 378 A1 offenbarten Verfahrens führt zur Herstellung von polymeren Hohlfasermembranen mit isoporöser Außenoberfläche, die auf der Selbstorganisation der maßgeschneiderten Blockcopolymere in Mikrophasen, der so genannten Mikrophasenseparation, beruht. Diese isoporöse trennaktive Außenoberfläche geht in eine typische schwammartige Struktur einer durch Fällungsmittel induzierte Phaseninversion hergestellten Membran. Diese schwammartige Struktur verleiht der Hohlfaden-Membran ihre Stabilität und Durchlässigkeit, so dass die Hohlfaden-Membran selbststützend bzw. selbsttragend ist. Für die innere Oberfläche der Hohlfaden-Membran wird dann ein Fällmittel mit herabgesetzter Fällaktivität verwendet. Die Verwendung eines Fällmittels mit herabgesetzter Fällaktivität bewirkt, dass die Oberflächenbildung mit einer geringeren Kinetik abläuft als bei einem üblicherweise verwendeten Fällmittel. Dadurch bleibt der Reaktion genügend Zeit für eine teilweise Entmischung an der inneren Oberfläche, so dass sich Poren in der inneren Oberfläche bilden können, die eine Verwendung für Filtrationen ermöglichen.

Andere Blockcopolymere sind ebenfalls bereits dem vorbeschriebenen Verfahren unterworfen worden. So ist in WO 2012/151482 A2 ein Triblockterpolymer aus Poly(isopren-*b*-styren-*b*-4-vinylpyridin) bei einer geringen Polydispersität von 1,16 synthetisiert worden, wobei sich nach einer Abdampfzeit von 75 Sekunden eine isoporöse trennaktive Oberflächenschicht ergab.

Eine Studie zur Abhängigkeit der Porengröße vom Molekulargewicht ist außerdem in S. Rangou et al., "Self-Organized Isoporous Membranes with Taylored Pore Sizes", Journal of Membrane Science 451, 266-275 (2014) veröffentlicht. Dort wurden uniforme Porengrößen von 20 bis 70 Nanometern abhängig von dem Molekulargewicht erzeugt.

Technisch stellt sich das Problem, dass es schwierig ist, schon bei der Herstellung der Blockcopolymere die Verfahrensbedingungen so einzustellen, dass ein gewünschter Porendurchmesser und gegebenenfalls Porenabstand bei den herzustellenden Membranen erreicht wird. Die anionische Polymerisation führt zwar zu einem Ergebnis mit sehr geringer Polydispersität, was grundsätzlich für die Herstellung der beschriebenen integralasymmetrischen isoporösen Polymermembranen günstig ist. Das genaue Molekulargewicht hängt jedoch stark von den Synthesebedingungen ab, so dass ein großer Aufwand betrieben werden muss, Blockcopolymere mit dem gewünschten bzw. notwendigen Molekulargewicht ihrer Bestandteile herzustellen.

Demgegenüber liegt der vorliegenden Erfindung die Aufgabe zugrunde, auf einfache Weise mit wenig Aufwand isoporöse integralasymmetrische Polymermembranen auf der Basis von Blockcopolymeren mit einer gewünschten Porengröße herstellen zu können.

Diese Aufgabe wird gelöst durch ein Verfahren zur Herstellung einer Polymermembran, insbesondere Flachmembran oder Hohlfadenmembran, mit einer isoporösen trennaktiven Schicht mit voreingestellter oder voreinstellbarer Porengröße, insbesondere einer Ultrafiltrationsmembran oder Nanofiltrationsmembran, mit den folgenden Schritten:
a) Herstellen einer Polymerlösung mit wenigstens einem Lösungsmittel, in dem wenigstens zwei verschiedene zuvor hergestellte amphiphile Blockcopolymere mit jeweils wenigstens zwei verschiedenen Polymerblöcken gelöst werden, wobei die verschiedenen Blockcopolymere jeweils eine geringe Polydispersität von weniger als 1,5, aufweisen,
b) Herstellen einer Membran durch

i) Ausstreichen der Polymerlösung zu einem Film, Ausbilden einer mikrophasenseparierten trennaktiven Schicht durch Abdampfenlassen eines oberflächennahen Teils des wenigstens einen Lösungsmittels während eines vorbestimmten oder vorbestimmbaren Wartezeitraums, insbesondere zwischen 1 und 120 Sekunden, und Herstellen einer mit der trennaktiven Schicht integralen Stützschicht mit schwammartiger Struktur durch Ausfällen einer Membran durch Eintauchen des Films in ein wenigstens ein Nichtlösungsmittel für die Blockcopolymere umfassendes Fällbad,
   oder
ii) Pressen der Polymerlösung durch eine als Hohlkerndüse oder Mehrfachhohlkerndüse ausgebildete Spinndüse zur Formung eines Hohlfadens, in dessen Mitte eine Flüssigkeitssäule gesponnen wird, die aus einem Fällmittel mit herabgesetzter Fällaktivität besteht, wobei nach Durchlaufen einer Fallstrecke in einer Atmosphäre der gesponnene Hohlfaden in ein Fällbad zur Formung der Hohlfaden-Polymermembran mit isoporöser Außenhaut, poröser Innenhaut und schwammartiger Innenstruktur eingetaucht wird,
das dadurch weitergebildet ist, dass die Polymerblöcke der wenigstens zwei verschiedenen Blockcopolymere in der Polymerlösung jeweils paarweise homogen miteinander mischbar sind und in der Polymerlösung ein homogener Blend aus den verschiedenen Blockcopolymeren hergestellt wird, wobei die verschiedenen Blockcopolymere sich in ihren Molekulargewichten und/oder in ihren relativen Blocklängen unterscheiden und eine Porengröße in der trennaktiven Schicht durch eine Einstellung eines Mischungsverhältnisses der beiden Blockcopolymere im Blend eingestellt wird.

Die Erfindung beruht auf der überraschenden Entdeckung, dass aus Mischungen von Blockcopolymeren mit unterschiedlichen Molekulargewichten oder unterschiedlichen relativen Zusammensetzungen, deren Komponenten paarweise miteinander mischbar sind, weiterhin isoporöse Membranen herstellbar sind, deren Porendurchmesser im Wesentlichen linear nach den Anteilen der, im einfachsten Falle zwei, unterschiedlich schweren Blockcopolymere im Blend abhängt.

Die Mischung unterschiedlicher Blockcopolymere führt oftmals zu geordneten Überstrukturen mit gänzlich anderen Charakteristika als die der Ausgangscopolymere. So können sich zylindrische Strukturen zu gyroidalen oder lamellaren Strukturen verbinden. Dies wurde etwa in V. Abetz, Th. Goldacker, "Formation of superlattices via blending of block copolymers", Macromol. Rapid Commun. 21, 16-34 (2000) gezeigt.

Dieses Ergebnis des erfindungsgemäßen Verfahrens ist überraschend, denn es ist nicht selbstverständlich, dass sich bei einem Blend aus verschieden schweren Blockcopolymeren eine mikrophasenseparierte Porenstruktur einstellt, deren Periodizität zwischen denen der reinen Blockcopolymere liegt. Es ist vielmehr zu erwarten gewesen, dass gänzlich unterschiedliche Überstrukturen entstehen, bei der Selbstorganisation des Blends eine Entmischung auftritt, so dass keine isoporöse Struktur entsteht, oder dass das schwerere der beiden Blockcopolymere mit seiner größeren Länge dominant ist. Stattdessen weist der homogene Blend die mikrophasenseparierte Periodizität eines gemittelten Blockcopolymers mit gemitteltem Molekulargewicht auf, das so in dem Blend überhaupt nicht vorkommt.

Das Merkmal der jeweils paarweise homogenen Mischbarkeit der Polymerblöcke der verschiedenen Copolymere ist im Rahmen der vorliegenden Erfindung so zu verstehen, dass im einfachsten Fall ein erstes Blockcopolymer die Böcke AB und ein zweites Blockcopolymer die Blöcke CD umfasst. Die paarweise Mischbarkeit der Polymerblöcke bedeutet, dass die Blöcke A und C einerseits sowie die Blöcke B und D andererseits miteinander mischbar sind. Dabei kann C beispielsweise eine längere oder kürzere Version des Polymerblocks A sein, oder ein anderer Polymerblock, dessen Mischbarkeit mit A bekannt ist. Das Gleiche gilt entsprechend für die Paarung der Polymerblöcke B und D.

Zur Einstellung gewünschter Porengrößen ist vorzugsweise vorgesehen, dass nach der Herstellung der verschiedenen amphiphilen Blockcopolymere zunächst jeweils unverblendete integralasymmetrische isoporöse Membranen hergestellt werden, deren durchschnittliche Porendurchmesser jeweils bestimmt werden, und dann das Mischungsverhältnis der beiden unterschiedlich schweren Komponenten in der Polymerlösung zur Erzielung einer Membran mit Poren einer vorbestimmten Größe eingestellt wird, insbesondere durch lineare Interpolation, um zum gewünschten Porendurchmesser zu gelangen.

Diese Vorgehensweise, aus den einzelnen Blockcopolymeren jeweils unverblendete, also sortenreine Polymerlösungen und daraus nach dem gleichen Verfahren, allerdings ohne den Blend-Schritt, integralasymmetrische isoporöse Polymer-Flach- oder Hohlfadenmembranen herzustellen, deren jeweilige Porendurchmesser zur Bestimmung und anhand der gewünschten Porengröße durch lineare Interpolation das Mischungsverhältnis der beiden Komponenten zu bestimmen, stellt einen bevorzugten Teil des Verfahrens dar. Die einzelnen Blockcopolymere können so in großen Mengen hergestellt werden, und eine Variation von Batch-zu-Batch kann durch die Herstellung und Vermessung der Poren einer sortenreinen Membran für jedes Batch und die Neueinstellung der Blendverhältnisse berücksichtigt werden.

Da es sich bei den Blockcopolymeren, die zu den erfindungsgemäßen integralasymmetrischen isoporösen Polymermembranen führen, um Makromoleküle handelt, deren Molekulargewicht üblicherweise nicht weniger als 50 kDa und meist deutlich darüber beträgt, ist nur eine begrenzte Auswahl von erfindungsgemäß einsetzbaren Blockcopolymeren miteinander mischbar. Diese sind dem Fachmann aus der Fachliteratur bekannt. Die Vermischung läuft aufgrund einer entropischen Triebkraft freiwillig ab. Neben der reinen Mischungsentropie spielt auch die Konformationsentropie der verschiedenen Blöcke eine Rolle. Zwischen den inkompatiblen Blöcken A und B bildet sich eine Grenzfläche aus. Die A und B-Ketten verstrecken sich senkrecht zu dieser Grenzfläche bzw. zur Tangentialebene an einer gekrümmten Grenzfläche. Wenn verschieden lange Ketten gemischt werden, kann es dazu kommen, dass die eine Kettensorte sich mehr strecken muss, die andere aber dafür weniger verstreckt sein kann und "unterm Strich" die Bilanz energetisch günstig ist, d.h. die höhere Verstreckungsenergie bei der einen Kettensorte durch eine geringere Vertreckungsenergie bei der anderen Kettensorte kompensiert oder überkompensiert wird. Dies bedeutet netto eine Abnahme der freien Energie des Gesamtsystems. Der einfachste Fall ist, dass die beiden unterschiedlichen Blockcopolymere jeweils gleichartige Blockcopolymerkomponenten aufweisen, jedoch mit unterschiedlichen Molekulargewichten.

In einer bevorzugten, weil besonders einfachen Ausführungsform beruhen die verschiedenen Blockcopolymere auf den gleichen Monomeren für die verschiedenen Polymerblöcke. Dies ist auch deswegen der einfachste Fall, weil solche gleichartigen Blockcopolymere in einem weiten Molekulargewichtsbereich homogen mischbar sind. Außerdem ist es möglich, beispielsweise die schwereren und die leichteren Blockcopolymere in einem Batch zu erzeugen, wobei die anionische Polymerisation bei dem kürzeren bzw. leichteren Bestandteil früher abgebrochen wird als beim schwereren Bestandteil, was die Vorbereitung deutlich vereinfacht.

Vorzugsweise ist ein mittleres Molekulargewicht des schwereren oder schwersten der Blockcopolymere um einen Faktor von weniger als 5, insbesondere weniger als 2,5, insbesondere weniger als 1,5, größer als ein mittleres Molekulargewicht des leichteren oder leichtesten der Blockcopolymere. Ein großer Faktor zwischen den mittleren Molekulargewichten der beiden Blockcopolymere ist beispielsweise dann von Vorteil, wenn mehrere Membranen mit vorherbestimmten, aber unterschiedlichen Porengrößen hergestellt werden sollen, während es beispielsweise bei nur einer vorgewünschten Porengröße ausreicht, die beiden Blockcopolymere relativ eng bezüglich ihres Molekulargewichts beieinander herzustellen und miteinander zu verblenden. Diese müssen allerdings sicher mit Molekulargewichten oberhalb und unterhalb des Molekulargewichts hergestellt werden, das zur gewünschten Porengröße führt.

Die Rolle der einzelnen Komponenten der einzelnen Blockcopolymere ist ähnlich wie das gesamte Molekulargewicht. Die Verhältnisse der beiden Blockcopolymerkomponenten in einem Blockcopolymer zueinander beeinflussen ebenfalls die Porendurchmesser sowie die Porenabstände. Es können daher auch gleichzeitig sowohl die gesamten Molekulargewichte der verschiedenen Blockcopolymere als auch die relativen Molekulargewichte der einzelnen Polymerblöcke unterschiedlich gewählt werden, um zum gewünschten Ergebnis zu kommen.

Sollte sowohl die Porendurchmessergröße als auch der Porenabstand wunschgemäß eingestellt werden, so ist es erfindungsgemäß auch möglich, drei untereinander verschiedene Blockcopolymere in der Polymerlösung zu verblenden, die sich sowohl im Molekulargewicht als auch in den relativen Anteilen der einzelnen Blockcopolymerkomponenten unterscheiden. Auf diese Weise wird es möglich, Porendurchmesser und Porenabstand unabhängig voneinander innerhalb der Grenzen, die von den Ausgangsblockcopolymeren im Blend gegeben sind, einzustellen.

Bevorzugt ist, dass eine Mehrheitskomponente in einem Blockcopolymer auch die Mehrheitskomponente in dem oder den anderen Blockcopolymeren bildet. Dies verhindert, dass beispielsweise diejenige Komponente, die in einem Blockcopolymer den Bulk zwischen den Poren bildet, im anderen Blockcopolymer in der Minderkomponente vorhanden ist und somit gegebenenfalls nicht den Bulk darstellt, was zu einer Abweichung von der gewünschten isoporösen mikrophasenseparierten Struktur führen kann.

Vorzugsweise macht eine Mehrheitskomponente zwischen 60% und 90% des gesamten Molekulargewichts eines Blockcopolymers aus, wobei insbesondere die Polymerlängen der wenigstens zwei Polymerblöcke des amphiphilen Blockcopolymers relativ zueinander so gewählt sind, dass eine Selbstorganisation im Lösungsmittel zur Bildung einer sphärischen oder zylindrischen Mizellenstruktur im Lösungsmittel führt, insbesondere ein Längenverhältnis zwischen etwa 2:1 und etwa 10:1, insbesondere zwischen etwa 3:1 und 6:1.

Die Blockcopolymere in dem Blend in der Polymerlösung können Blockcopolymere mit zwei, drei oder mehr Blöcken sein, sofern sie zu einer entsprechenden mikrophasenseparierten Struktur führen.

In dem Bereich des Films, der nicht oberflächennah ist und daher keinen Konzentrationsgradienten bezüglich der Polymere im Lösungsmittel aufweist, geschieht das Ausfällen beim Eintauchen in das Fällbad durch nichtlösungsmittelinduzierte Phasenseparation (NIPS), die in der schwammartigen Struktur des Stützmaterials resultiert, das mit der isoporösen trennaktiven Schicht integral ist, d.h. in diese übergangslos und stoffidentisch übergeht.

Vorzugsweise ist vorgesehen, dass wenigstens ein Blockcopolymer zwei oder drei untereinander verschiedene Polymerblöcke A, B und gegebenenfalls C der Konfiguration A-B, A-B-A oder A-B-C umfasst, wobei die Polymerblöcke jeweils aus der Gruppe von Polystyrol, Poly-*tert*-Butylstyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid, Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind.

Diese Monomere lassen sich durch anionische Polymerisation polymerisieren oder durch Polykondensation und anschließende Fraktionierung mit geeigneter geringer Polydispersität herstellen und zu amphiphilen Blockcopolymeren mit engverteilten Molekulargewichten geeignet zusammenstellen, so dass das erfindungsgemäße Verfahren mit diesen Blockcopolymeren zum Erfolg führt.

Die Blockcopolymere weisen vorzugsweise ein Molekulargewicht zwischen 80 kDa und 600 kDa, insbesondere zwischen 170 kDa und 320 kDa, auf.

Vorzugsweise werden mehrere Lösungsmittel verwendet, wobei die Polymerblöcke des Blockcopolymers in den unterschiedlichen Lösungsmitteln unterschiedlich gut löslich sind und die Lösungsmittel unterschiedlich flüchtig sind. Als Lösungsmittel werden vorteilhafterweise Dimethylformamid, Dimethylacetamid, N-Methylpyrrolidon, Dimethylsulfoxid, Tetrahydrofuran, Sulfolan, Dioxan oder eine Mischung aus zwei oder mehr der Lösungsmittel verwendet.

Vorteilhafterweise machen die Blockcopolymere zusammen einen Gewichtsanteil zwischen 10 Gew.-% und 40 Gew.-%, insbesondere zwischen 15 Gew.-% und 30 Gew.-%, der Lösung aus. In diesem Gewichtsanteilsbereich weist die Polymerlösung eine ausreichende Viskosität auf, um zum erfindungsgemäßen Erfolg zu führen. Eine zu geringe Viskosität führt nicht zu einer Membranbildung, eine zu hohe Viskosität verhindert die Ausbildung der mikrophasenseparierten Strukturen, da die Selbstorganisation behindert ist. Die Feststellung des idealen Gewichtsanteils der Blockcopolymere bzw. des Blockcopolymerblends in der Lösung hängt von den gewählten Blockcopolymeren ab und ist das Ergebnis weniger standardisierter unaufwändiger Versuche.

Als Fällbad werden bevorzugt Wasser, Methanol, Ethanol, Aceton und/oder unpolare Fällungsmittel, insbesondere Petroläther, verwendet. Das Fällungsmittel ist in jedem Fall ein Nichtlösemittel für die matrixbildenden Blöcke, also die Mehrheitskomponenten, der verschiedenen Copolymere.

Das Verfahren wird dadurch vorteilhafterweise weitergebildet, dass in der Polymerlösung zusätzlich ein Metallsalz eines mit einem der Polymerblöcke komplexierenden Metalls oder Übergangsmetalls und/oder ein Kohlenhydrat mit einem Gewichtsanteil zwischen 0,1 und 5 Gew.-% gelöst wird oder werden. Bei einem solchen Metallsalz kann es sich auch um ein Übergangsmetall oder ein Metall der zweiten Hauptgruppe handeln. Als Kohlenhydrat kommen beispielsweise Saccharose, Traubenzucker, Fruchtzucker und Zyklodextrin infrage.

Die Bildung einer entsprechenden Hohlfaden-Polymermembran ohne Verblendung verschiedener Copolymere ist grundsätzlich aus DE 10 2012 221 378 A1 der Anmelderin bekannt, deren Offenbarungsgehalt vollinhaltlich aufgenommen sein soll. Bei dem dry/wet-Spinning-Prozess wird besonders vorteilhafterweise die Polymerlösung mit einem Überdruck von 0,01 bis 0,5 bar, insbesondere von zwischen 0,05 und 0,25 bar, durch die Spinndüse gepresst. Damit lässt sich eine sehr regelmäßige Hohlfaden-Membran herstellen, wobei der erforderliche Überdruck unter anderem von der Viskosität der Polymerlösung abhängt. Auch die Geometrie, also insbesondere Radius, Spaltbreite und Form, der Spinndüse spielt eine Rolle, so dass für ein gewähltes System der Überdruck bzw. der Durchsatz durch Testreihen sicher und einfach ermittelbar ist.

Die erfindungsgemäß zu verwendende Hohlkerndüse oder Mehrfachhohlkerndüse hat im einfachsten Fall eine ringschlitzförmige äußere Düsenöffnung, die, insbesondere konzentrisch, um eine zentrale Düsenöffnung herum angeordnet ist. Auch andere Hohlfaserquerschnitte können durch geeignete Geometrien der Hohlkerndüse oder Mehrfachhohlkerndüse erzeugt werden, beispielsweise elliptische, polygonale, sternförmige mit 3 oder mehr Strahlen unter anderem. Mit drei- oder mehrschichtigen Mehrfachhohlkerndüsen ist es auch möglich, beispielsweise Träger und Membran und gegebenenfalls noch weitere Schichten cozuextrudieren. Solche Trägerschichten sind an der Außenseite und/oder der Innenseite der erfindungsgemäßen Schicht anzuordnen.

Die Fallstrecke weist vorzugsweise eine Länge von zwischen 1 cm und 100 cm auf. Je nach eingestelltem Überdruck bzw. Durchsatz und eingestellter Spinnrate bedeutet dies, dass eine Abdampfzeit vor dem Eintauchen in das Fällbad von zwischen 1 Sekunden und 60 Sekunden vorteilhafterweise vorliegt. Die Fallstrecke ist ebenfalls durch Testreihen sicher optimal ermittelbar.

Vorzugsweise werden mehrere Lösungsmittel verwendet, wobei die Polymerblöcke des Blockcopolymers in den unterschiedlichen Lösungsmitteln unterschiedlich gut löslich sind und die Lösungsmittel unterschiedlich flüchtig sind. Die Verwendung verschiedener Lösungsmittel, die insbesondere für die verschiedenen Blöcke der Blockcopolymere unterschiedlich gute Lösungsmittel darstellen, unterstützen die Verfestigung der Selbstorganisation und Mikrophasenbildung an der Außenoberfläche des Hohlfadens vor dem Eintauchen in das Fällbad.

Vorteilhafterweise wird als Fällmittel in der Flüssigkeitssäule und in dem Fällbad nach der Fallstrecke unabhängig voneinander jeweils ein polares oder ein unpolares Fällmittel oder Fällmittelgemisch verwendet, insbesondere Wasser und/oder Methanol und/oder Ethanol und/oder Aceton und/oder eine Mischung aus zwei oder mehr der Fällmittel oder Diethylether, und als Lösungsmittel in der Polymerlösung und in der Flüssigkeitssäule unabhängig voneinander jeweils ein polares oder ein unpolares Lösungsmittel, insbesondere Dimethylformamid, Dimethylacetamid, N-Methylpyrrolidon, Dimethylsulfoxid, Tetrahydrofuran, Sulfolan, Dioxan oder eine Mischung aus zwei oder mehr der Lösungsmittel, wobei das oder die Lösungsmittel in der Flüssigkeitssäule mit dem oder den Fällmitteln in der Flüssigkeitssäule mischbar sind.

Die im jeweiligen Fällmittel oder Fällmittelgemisch sowie dem jeweiligen Lösungsmittel oder Lösungsmittelgemisch verwendeten Fällmittel bzw. Lösungsmittel sind ebenfalls jeweils untereinander mischbar, so dass das jeweils verwendete Fällmittelgemisch bzw. Lösungsmittelgemisch einphasig ist, also homogen. Diethylether ist ein Beispiel für ein wasserunlösliches Fällmittel. Für einige Polymere eignen sich nichtwässrige Lösungsmittel und Fällmittel besser als wässrige Lösungsmittel und Fällmittel.

Die der Erfindung zugrunde liegende Aufgabe wird auch durch eine Polymermembran, insbesondere Flach- oder Hohlfadenmembran, mit isoporöser trennaktiver Schicht, insbesondere einer Ultrafiltrationsmembran oder Nanofiltrationsmembran, mit voreingestellter Porengröße und mit einem Verhältnis der maximalen Porendurchmesser zu den minimalen Porendurchmessern von weniger als 3, gelöst, das hergestellt oder herstellbar nach einem zuvor beschriebenen erfindungsgemäßen Verfahren ist.

Ebenfalls erfindungsgemäß ist ein Filtrationsmodul, insbesondere Ultrafiltrationsmodul oder Nanofiltrationsmodul, mit einer erfindungsgemäßen zuvor beschriebenen Polymermembran sowie eine Verwendung einer entsprechenden Polymermembran oder eines entsprechenden Filtrationsmoduls zur Reinigung von Wasser oder von biologischen Makromolekülen oder Wirkstoffen vorgesehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand eines Ausführungsbeispiels unter Bezugnahme auf die Figuren beschrieben, wobei bezüglich aller im Text nicht näher erläuterten erfindungsgemäßen Einzelheiten ausdrücklich auf die Zeichnungen verwiesen wird. Es zeigen:
- Fig. 1.: SEM Mikrographen der Membranoberflächen von reinen und von Blendblockcopolymerlösungen,
- Fig. 2: den funktionellen Zusammenhang zwischen dem durchschnittlichen Porendurchmesser der Membranoberflächen von dem Blendverhältnis der beiden Blockcopolymerkomponenten gemäß Fig. 1,
- Fig. 3: SEM Mikrographen der Membranoberflächen von weiteren reinen und Blendblockcopolymerlösungen,
- Fig. 4: den funktionellen Zusammenhang zwischen dem durchschnittlichen Porendurchmesser der Membranoberflächen von dem Blendverhältnis der beiden Blockcopolymerkomponenten gemäß Fig. 3,
- Fig. 5: SEM Mikrographen der Membranoberflächen von weiteren reinen und Blendblockcopolymerlösungen,
- Fig. 6: den funktionellen Zusammenhang zwischen dem durchschnittlichen Porendurchmesser der Membranoberflächen von dem Blendverhältnis der beiden Blockcopolymerkomponenten gemäß Fig. 5
- Fig. 7: SEM Mikrographen der Membranoberflächen von weiteren reinen und Blendblockcopolymerlösungen und
- Fig. 8: den funktionellen Zusammenhang zwischen dem durchschnittlichen Porendurchmesser der Membranoberflächen von dem Blendverhältnis der beiden Blockcopolymerkomponenten gemäß Fig. 7.

### Ausführungsbeispiele

### Erstes Ausführungsbeispiel

In einem ersten Ausführungsbeispiel wurde eine Versuchsreihe anhand zweier Typen von Polystyrol-*block*-Poly(4-vinylpiridin) (PS-*b*P4VP) Blockcopolymeren mit unterschiedlichen Molekulargewichten und ähnlichen Gewichtsanteilen von P4VP durchgeführt. Bei dem schweren Blockcopolymer handelte es sich um PS₈₁-*b*-P4VP₁₉, mit 156 kg/Mol Molekulargewicht, wobei die Parameter 81 und 19 die prozentualen Anteile von Polystyrol und Poly(4-vinylpyridin) an dem gesamten Molekulargewicht bezeichnen. Die leichtere Komponente war PS_{79,8}-*b*-P4VP_{20,2} mit 95 kg/Mol Molekulargewicht. Beide wurden durch sequentielle anionische Polymerisation hergestellt. Beide Blockcopolymere haben eine schmale Molekulargewichtsverteilung.

Die selbstorganisierten uniformen Poren an der oberen Oberfläche der Flachmembranen bildeten sich durch Selbstorganisation und nachfolgende nichtlösungsmittelinduzierte Phasenseparation. Dazu wurden die Konzentration und die Lösungsmittelzusammensetzung eingestellt und die Abdampfzeit vor der Ausfällung untersucht. Als geeignete Abdampfzeit wurden 10 Sekunden ermittelt. Die Konzentrationen der Blendlösungen und die Zusammensetzungen der Blockcopolymermischungen in den Blends bezüglich der Gewichtsanteile der jeweiligen Blockcopolymere in Bezug auf das Gesamtgewicht der Mischung wurden zwischen den Zusammensetzungen der reinen Blockcopolymere und geeigneten Konzentrationen für eine uniforme Porenbildung variiert (siehe Tabelle 1). Die Temperatur des Fällbades betrug zwischen 20 und 25 °C.

**Tabelle 1**

| Blendverhältnis [Gew.-%] / PS₈₁-P4VP₁₉¹⁵⁶/PS_{79.8}-P4VP_{20.2}⁹⁵ | Polymerkonzentration [Gew.-%] | DMF/THF [Gew.-%] |
|---|---|---|
| 100/0 | 25 | 50/50 |
| 80/20 | 26 | 50/50 |
| 50/50 | 27 | 50/50 |
| 20/80 | 28 | 50/50 |
| 0/100 | 28 | 50/50 |

Wie aus Tabelle 1 zu erkennen ist, ist die Polymerkonzentration beim Übergang von einem vollständig schweren Blockcopolymer zu einem vollständig leichteren Blockcopolymer gesteigert worden, da ein schwereres Blockcopolymer eine höhere Viskosität bei gleicher Konzentration aufweist als ein leichteres Blockcopolymer. So wurde die Viskosität der Polymerlösung in allen Proben etwa konstant gehalten. In jedem Fall war das Lösungsmittel ein Gemisch aus 50 Gew.-% Dimethylformamid (DMF) und 50 Gew.-% Tetrahydrofuran (THF).

Die Lösung wurde jeweils 48 Stunden bei Raumtemperatur (20 °C) gerührt, um die vollständige Auflösung sicherzustellen. Vor dem Membranherstellungsschritt wurden die Lösungen jeweils mehrere Stunden ohne Störung gelagert, um den Effekt des Rührens zu entfernen und feine Luftblasen, die in der Lösung gefangen waren, zu entfernen.

Sowohl die reinen Polymerlösungen als auch die Blendlösungen zweier Blockcopolymere wurden zu Filmen mittels eines Rakels (doctor blade) auf einem porösen Substrat (non-woven) ausgestrichen, das auf einer Glasplatte fixiert war. Die Öffnungshöhe des Rakels wurde bei 200 µm festgesetzt, um die initiale Filmdicke konstant zu halten. Der Film wurde für eine bestimmte Zeit, zwischen 5 bis 15 Sekunden, typisch 10 Sekunden, in Ruhe gelassen, so dass Lösungsmittel aus einer oberflächennahen Schicht abdampfen konnte und die Mikrophasenseparation der Blockcopolymere initiiert werden konnte.

Nach der Abdampfzeit wurde der Film in ein Fällbad aus deionisiertem Wasser eingetaucht, das mit beiden Lösungsmitteln mischbar ist, jedoch ein starkes Fällmittel bzw. Nichtlösungsmittel für Polystyrol und P4VP aufgrund der entsprechenden Lösungsparameter darstellt. Der Phaseninversionsprozess vervollständigt die Verfestigung des Blockcopolymerfilms durch Austausch des Lösungsmittels und des Nichtlösungsmittels (Wasser) und durch die Bildung der isoporösen asymmetrischen Membran mit offenen Porenkanälen an der oberen Oberfläche. Die uniforme periodische Porenschicht, die sich über einer asymmetrischen nicht-geordneten makroporösen Schicht bildet, ist eine Konsequenz aus der Kombination der Selbstorganisation von Blockcopolymeren und der nicht-lösungsmittelinduzierten Phasenseparation (SNIPS).

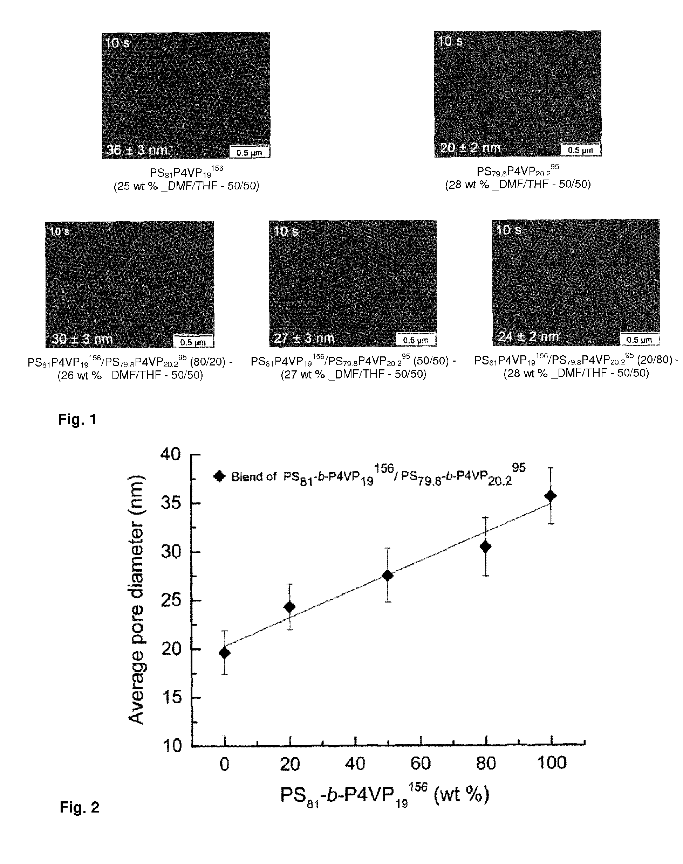

Scanning Electron Microscopy (SEM) Mikrographe sind in Fig. 1 gezeigt, wobei in der oberen Reihe die Ergebnisse aus den beiden reinen Blockcopolymerlösungen und in der unteren Reihe die Ergebnisse aus drei Blendlösungen bzw. der daraus entstandenen Membranen bzw. deren Oberflächen gezeigt sind. Jedes Mikrograph zeigt auch die entsprechende Abdampfzeit (10 s), Porendurchmesser und eine Längenskala.

Die binären Blendmembranen zweier unterschiedlicher PS-*b*-P4VP-Blockcopolymere mit unterschiedlichen molekularen Gewichten, jedoch ähnlichen Gewichtsanteilen des P4VP-Blocks sind selbstorganisiert mit abstimmbaren durchschnittlichen Porengrößen als Funktion des Mischungsverhältnisses im Blend. Dieser funktionelle Zusammenhang ist in Fig. 2 gezeigt. Die Fehlerbalken entsprechen im Wesentlichen den in Fig. 1 dargestellten Werten für die Verteilung der Porengrößen.

Wie in Fig. 2 zu sehen ist, ergibt sich eine gute Näherung an einen linearen Fit. Es ist daher in guter Näherung eine lineare Abhängigkeit vom Blendverhältnis zu konstatieren.

### Zweites Ausführungsbeispiel

Unter ansonsten gleichen Versuchsbedingungen wie im ersten Ausführungsbeispiel wurden die Blockcopolymere PS_{82.2}P4VP_{17.8}¹⁷⁷ und PS_{83.7}P4VP_{16.3}¹⁰⁰ untersucht und miteinander verblendet. Die Blendverhältnisse, Polymerkonzentrationen und Lösungsmittelgemische sind der Tabelle 2 zu entnehmen.

**Tabelle 2**

| Blendverhältnis [Gew.-%] / PS_{82.2}-P4VP_{17.8}¹⁷⁷/PS_{83.7}-P4VP_{16.3}¹⁰⁰ | Polymerkonzentration [Gew.-%] | DMF/THF [Gew.-%] |
|---|---|---|
| 100/0 | 25 | 50/50 |
| 80/20 | 27 | 50/50 |
| 50/50 | 29 | 50/50 |
| 20/80 | 31 | 50/50 |
| 0/100 | 33 | 50/50 |

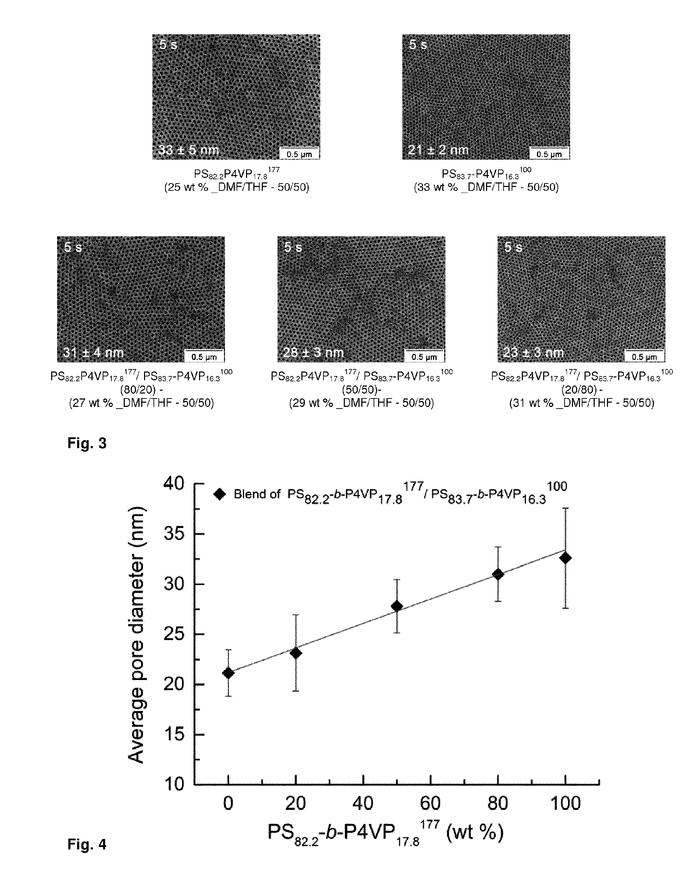

Die SEM Mikrographen hierzu sind in Fig. 3 zu sehen, wobei die Membranen aus den sortenreinen Polymerlösungen in der oberen Zeile gezeigt sind, während die Blendmembranen in der unteren Zeile gezeigt sind. Der funktionale Zusammenhang der durchschnittlichen Porengröße hierzu ist der Fig. 4 zu entnehmen. Auch hier bestätigt sich eine gute lineare Abhängigkeit.

### Drittes Ausführungsbeispiel

Unter ansonsten gleichen Versuchsbedingungen wie im ersten und zweiten Ausführungsbeispiel wurden die Blockcopolymere PS₇₅P4VP₂₅¹⁰⁰ und PS_{83.7}P4VP_{16.3}¹⁰⁰ untersucht und miteinander verblendet. Hier ist also im Gegensatz zu den ersten und zweiten Ausführungsbeispielen nicht das gesamte Molekulargewicht der Blendpartner unterschiedlich, sondern die relativen Polymerblockgrößen. Die Blendverhältnisse, Polymerkonzentrationen und Lösungsmittelgemische sind der Tabelle 3 zu entnehmen.

**Tabelle 3**

| Blendverhältnis [Gew.-%] / PS₇₅-P4VP₂₅¹⁰⁰/PS_{83.7}-P4VP_{16.3}¹⁰⁰ | Polymerkonzentration [Gew.-%] | DMF/THF [Gew.-%] |
|---|---|---|
| 100/0 | 27 | 50/50 |
| 50/50 | 29 | 50/50 |
| 0/100 | 33 | 50/50 |

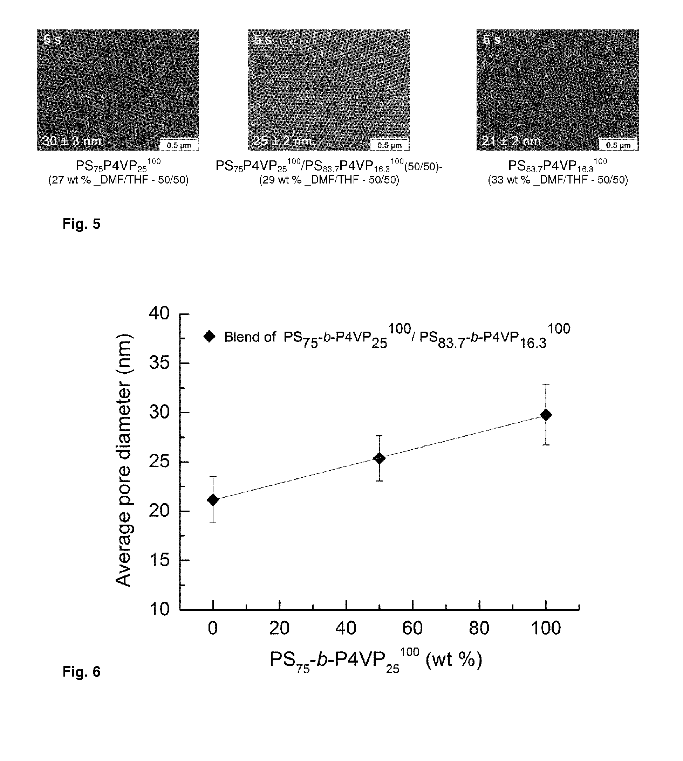

Die SEM Mikrographen hierzu sind in Fig. 5 gezeigt. Es ist zu beachten, dass die Minoritätskomponente P4VP bei gleichem Gesamtmolekulargewicht hier zwischen 16,3 Gew.-% und 25 Gew.-% wechselt, also um ca. den Faktor 1,5. Dies stimmt sehr gut mit dem Verhältnis der Porengrößen bei den reinen Polymermembranen überein. Der wiederum in guter Näherung lineare funktionale Zusammenhang der durchschnittlichen Porengröße hierzu ist der Fig. 6 zu entnehmen.

Es zeigt sich also, dass auch durch die Veränderung der relativen Gewichtsanteile der Polymerkomponenten die Porengröße gut einstellbar ist.

### Viertes Ausführungsbeispiel

Unter ansonsten gleichen Versuchsbedingungen wie in den ersten drei Ausführungsbeispielen wurden die Blockcopolymere PtBS₈₇P4VP₁₃³² und PtBS₈₈P4VP₁₂¹²⁰ untersucht und miteinander verblendet. Hierbei steht PtBS für Poly-*tert*-Butylstyrol. In diesem Fall wurden aus dem Blend zwei Membranen hergestellt und untersucht, bei gleichem Mischungsverhältnis. Die Abdampfzeit betrug in diesen Beispielen jeweils 5 s. Im Unterschied zu den ersten drei Ausführungsbeispielen betrug die Temperatur des Fällbades in diesem Fall 3 °C.

Aufgrund der unterschiedlichen chemischen Eigenschaften von PtBS zu PS wurde auch ein abweichendes Lösungsmittelgemisch aus 14,7 Gew.-% DMF, 44,7 Gew.-% Dioxan und 40,6 Gew.-% THF gewählt. Die entsprechenden Polymerlösungsparameter sind in Tabelle 4 gezeigt.

Hier ist also im Gegensatz zu den ersten und zweiten Ausführungsbeispielen nicht das gesamte Molekulargewicht der Blendpartner unterschiedlich, sondern die relativen Polymerblockgrößen. Die Blendverhältnisse, Polymerkonzentrationen und Lösungsmittelgemische sind der Tabelle 4 zu entnehmen.

**Tabelle 4**

| Blendverhältnis [Gew.-%] / PtBS₈₇-P4VP₁₃³²⁰/PtBS₈₈-P4VP₁₂¹²⁰ | Polymerkonzentration [Gew.-%] | DMF/Dioxan/THF [Gew.-%] |
|---|---|---|
| 100/0 | 22 | 14,7/44,7/40,6 |
| 70/30 | 23 & 24 | 14,7/44,7/40,6 |
| 0/100 | 35 | 14,7/44,7/40,6 |

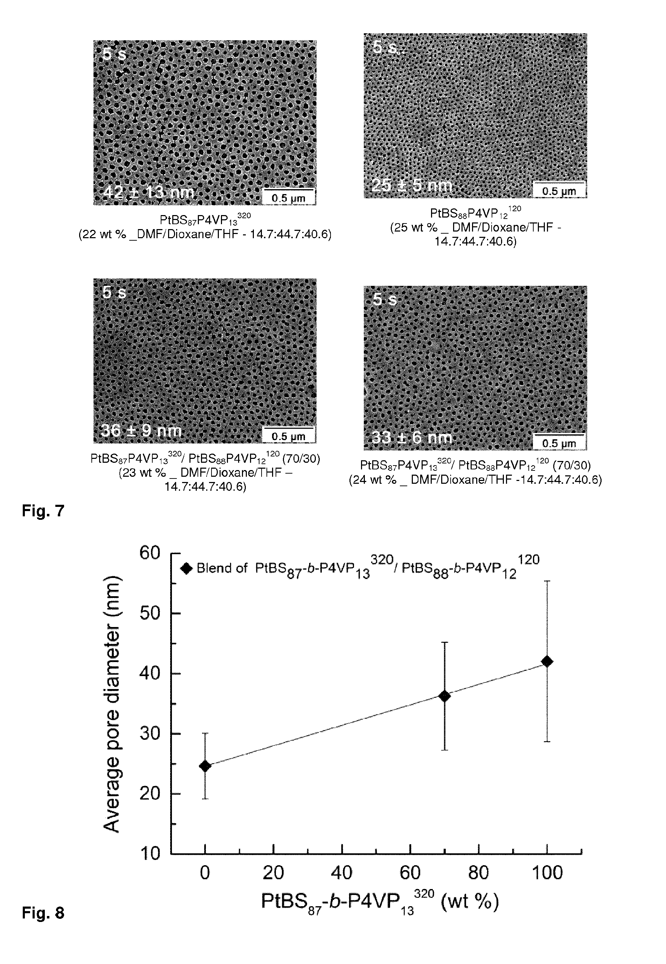

Die SEM Mikrographen hierzu sind in Fig. 7 gezeigt, mit den sortenreinen Membranen in der oberen Reihe und den Blendmembranen in der unteren Reihe. Die Porengrößen bei den Blendmembranen stimmen innerhalb der Fehlerbalken miteinander überein. Der wiederum in guter Näherung lineare funktionale Zusammenhang der durchschnittlichen Porengröße hierzu ist der Fig. 8 zu entnehmen.

Die Verfahrensbedingungen für die im vierten Ausführungsbeispiel gewählten Copolymere können weiter optimiert werden, wodurch sich die Porengrößen weiter vereinheitlichen lassen, so dass kleinere Fehlerbalken, als sie in Fig. 8 dargestellt sind, möglich sind.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

## Patentansprüche

1. Verfahren zur Herstellung einer Polymermembran, insbesondere Flachmembran oder Hohlfadenmembran, mit einer isoporösen trennaktiven Schicht mit voreingestellter oder voreinstellbarer Porengröße, insbesondere einer Ultrafiltrationsmembran oder Nanofiltrationsmembran, mit den folgenden Schritten:
a) Herstellen einer Polymerlösung mit wenigstens einem Lösungsmittel, in dem wenigstens zwei verschiedene zuvor hergestellte amphiphile Blockcopolymere mit jeweils wenigstens zwei verschiedenen Polymerblöcken gelöst werden, wobei die verschiedenen Blockcopolymere jeweils eine geringe Polydispersität von weniger als 1,5, aufweisen,
b) Herstellen einer Membran durch
i) Ausstreichen der Polymerlösung zu einem Film, Ausbilden einer mikrophasenseparierten trennaktiven Schicht durch Abdampfenlassen eines oberflächennahen Teils des wenigstens einen Lösungsmittels während eines vorbestimmten oder vorbestimmbaren Wartezeitraums, insbesondere zwischen 1 und 120 Sekunden, und Herstellen einer mit der trennaktiven Schicht integralen Stützschicht mit schwammartiger Struktur durch Ausfällen einer Membran durch Eintauchen des Films in ein wenigstens ein Nichtlösungsmittel für die Blockcopolymere umfassendes Fällbad,
oder
ii) Pressen der Polymerlösung durch eine als Hohlkerndüse oder Mehrfachhohlkerndüse ausgebildete Spinndüse zur Formung eines Hohlfadens, in dessen Mitte eine Flüssigkeitssäule gesponnen wird, die aus einem Fällmittel mit herabgesetzter Fällaktivität besteht, wobei nach Durchlaufen einer Fallstrecke in einer Atmosphäre der gesponnene Hohlfaden in ein Fällbad zur Formung der Hohlfaden-Polymermembran mit isoporöser Außenhaut, poröser Innenhaut und schwammartiger Innenstruktur eingetaucht wird,
**dadurch gekennzeichnet, dass** die Polymerblöcke der wenigstens zwei verschiedenen Blockcopolymere in der Polymerlösung jeweils paarweise homogen miteinander mischbar sind und in der Polymerlösung ein homogener Blend aus den verschiedenen Blockcopolymeren hergestellt wird, wobei die verschiedenen Blockcopolymere sich in ihren Molekulargewichten und/oder in ihren relativen Blocklängen unterscheiden und eine Porengröße in der trennaktiven Schicht durch eine Einstellung eines Mischungsverhältnisses der beiden Blockcopolymere im Blend eingestellt wird.

2. Verfahren nach Anspruch 1, **dadurch gekennzeichnet, dass** nach der Herstellung der verschiedenen amphiphilen Blockcopolymere zunächst jeweils unverblendete integralasymmetrische isoporöse Membranen hergestellt werden, deren durchschnittliche Porendurchmesser jeweils bestimmt werden, und dann das Mischungsverhältnis der beiden unterschiedlich schweren Komponenten in der Polymerlösung zur Erzielung einer Membran mit Poren einer vorbestimmten Größe eingestellt wird, insbesondere durch lineare Interpolation.

3. Verfahren nach Anspruch 1 oder 2, **dadurch gekennzeichnet, dass** die verschiedenen Blockcopolymere auf den gleichen Monomeren für die verschiedenen Polymerblöcke beruhen.

4. Verfahren nach einem der Ansprüche 1 bis 3, **dadurch gekennzeichnet, dass** ein mittleres Molekulargewicht des schwereren oder schwersten der Blockcopolymere um einen Faktor von weniger als 5, insbesondere weniger als 2,5, insbesondere weniger als 1,5, größer ist als ein mittleres Molekulargewicht des leichteren oder leichtesten der Blockcopolymere.

5. Verfahren nach einem der Ansprüche 1 bis 4, **dadurch gekennzeichnet, dass** eine Mehrheitskomponente in einem Blockcopolymer auch die Mehrheitskomponente in dem oder den anderen Blockcopolymeren bildet.

6. Verfahren nach einem der Ansprüche 1 bis 5, **dadurch gekennzeichnet, dass** eine Mehrheitskomponente zwischen 60% und 90% des gesamten Molekulargewichts eines Blockcopolymers ausmacht, wobei insbesondere die Polymerlängen der wenigstens zwei Polymerblöcke des amphiphilen Blockcopolymers relativ zueinander so gewählt sind, dass eine Selbstorganisation im Lösungsmittel zur Bildung einer sphärischen oder zylindrischen Mizellenstruktur im Lösungsmittel führt, insbesondere ein Längenverhältnis zwischen etwa 2:1 und etwa 10:1, insbesondere zwischen etwa 3:1 und 6:1.

7. Verfahren nach einem der Ansprüche 1 bis 6, **dadurch gekennzeichnet, dass** wenigstens ein Blockcopolymer zwei oder drei untereinander verschiedene Polymerblöcke A, B und gegebenenfalls C der Konfiguration A-B, A-B-A oder A-B-C umfasst, wobei die Polymerblöcke jeweils aus der Gruppe von Polystyrol, Poly-*tert*-Butylstyrol, Poly-4-vinylpyridin, Poly-2-vinylpyridin, Polybutadien, Polyisopren, Poly(ethylen-stat-butylen), Poly(ethylen-alt-propylen), Polysiloxan, Polyalkylenoxid, Poly-ε-caprolacton, Polylactid, Polyalkylmethacrylat, Polymethacrylsäure, Polyalkylacrylat, Polyacrylsäure, Polyhydroxyethylmethacrylat, Polyacrylamid, Poly-N-alkylacrylamid, Polysulfon, Polyanilin, Polypyrrol, Polytriazol, Polyvinylimidazol, Polytetrazol, Polyethylendiamin, Polyvinylalkohol, Polyvinylpyrrolidon, Polyoxadiazol, Polyvinylsulfonsäure, Polyvinylphosphonsäure oder Polymere mit quaternären Ammoniumgruppen ausgewählt sind.

8. Verfahren nach einem der Ansprüche 1 bis 7, **dadurch gekennzeichnet, dass** die Blockcopolymere ein Molekulargewicht zwischen 80 kDa und 600 kDa, insbesondere zwischen 170 kDa und 320 kDa, aufweisen.

9. Verfahren nach einem der Ansprüche 1 bis 8, **dadurch gekennzeichnet, dass** mehrere Lösungsmittel verwendet werden, wobei die Polymerblöcke des Blockcopolymers in den unterschiedlichen Lösungsmitteln unterschiedlich gut löslich sind und die Lösungsmittel unterschiedlich flüchtig sind.

10. Verfahren nach einem der Ansprüche 1 bis 9, **dadurch gekennzeichnet, dass** als Lösungsmittel Dimethylformamid, Dimethylacetamid, N-Methylpyrrolidon, Dimethylsulfoxid, Tetrahydrofuran, Sulfolan, Dioxan oder eine Mischung aus zwei oder mehr der Lösungsmittel verwendet werden und/oder dass als Fällbad Wasser, Methanol, Ethanol, Aceton und/oder unpolare Fällungsmittel, insbesondere Petroläther verwendet werden.

11. Verfahren nach einem der Ansprüche 1 bis 10, **dadurch gekennzeichnet, dass** die Blockcopolymere zusammen einen Gewichtsanteil zwischen 10 Gew.-% und 40 Gew.-%, insbesondere zwischen 15 Gew.-% und 30 Gew.-%, der Lösung ausmachen.

12. Verfahren nach einem der Ansprüche 1 bis 11, **dadurch gekennzeichnet, dass** in der Polymerlösung zusätzlich ein Metallsalz eines mit einem der Polymerblöcke komplexierenden Metalls oder Übergangsmetalls und/oder ein Kohlenhydrat mit einem Gewichtsanteil zwischen 0,1 und 5 Gew.-% gelöst wird oder werden.

13. Polymermembran, insbesondere Flach- oder Hohlfadenmembran, mit isoporöser trennaktiver Schicht, insbesondere einer Ultrafiltrationsmembran oder Nanofiltrationsmembran, mit voreingestellter Porengröße und mit einem Verhältnis der maximalen Porendurchmesser zu den minimalen Porendurchmessern von weniger als 3, hergestellt oder herstellbar nach einem Verfahren nach einem der Ansprüche 1 bis 12.

14. Filtrationsmodul, insbesondere Ultrafiltrationsmodul oder Nanofiltrationsmodul, mit einer Polymermembran nach Anspruch 13.

15. Verwendung einer Polymermembran nach Anspruch 13 oder eines Filtrationsmoduls nach Anspruch 14 zur Reinigung von Wasser oder von biologischen Makromolekülen oder Wirkstoffen.
